# FASCICULE DE BREVET EUROPEEN

(11) **EP 1 380 143 B1**
(45) Date de publication et mention de la délivrance du brevet: **26.04.2006**
(21) Numéro de dépôt: 02753727.3
(22) Date de dépôt: 20.03.2002
(51) Int. Cl.: H04L 12/66

(54) **PROCEDE D'ETABLISSEMENT DE COMMUNICATION DANS UN RESEAU MULTIMEDIA**
VERFAHREN ZUM VERBINDUNGSAUFBAU IN EINEM MULTIMEDIANETZWERK
METHOD FOR ESTABLISHING COMMUNICATION PATHS BETWEEN ACCESS POINTS OF A COMMUNICATION SYSTEM AND A COMMUNICATION SYSTEM USING SAID METHOD

(30) Priorité: 23.03.2001 FR 0103944
(43) Date de publication de la demande: 14.01.2004
(73) Titulaire: Eads Telecom, 78180 Montigny Le Bretonneux (FR)
(72) Inventeur: MERCURIALI, Jean-Pierre, F-91400 Orsay (FR); CHEVRIER, Emmanuel, F-91470 Limours (FR)
(74) Mandataire: Loisel, Bertrand
(86) Numéro de dépôt international: PCT/FR2002/000971
(87) Numéro de publication internationale: WO 2002/078277

(56) Documents cités:
- WO-A-95/31060
- HUITEMA C ET AL: "AN ARCHITECTURE FOR RESIDENTIAL INTERNET TELEPHONY SERVICE" IEEE NETWORK, IEEE INC. NEW YORK, US, vol. 13, no. 3, mai 1999 (1999-05), pages 50-56, XP000870631 ISSN: 0890-8044

## Description

La présente invention se rapporte au domaine des réseaux de communication, et plus particulièrement aux réseaux de transport de la voix comprenant un ou plusieurs sous-réseaux à commutation de circuit et un ou plusieurs sous-réseaux de transmission de paquets, avec des interfaces passerelles pour leurs interconnexions.

Le développement du réseau Internet a fortement contribué à l'apparition puis l'expansion de services de télécommunications prévus pour fonctionner selon la suite de protocoles de ce réseau, notamment le protocole de couche réseau IP ("Internet Protocol", Request for Comments (RFC) 760, Internet Engineering Task Force (IETF), janvier 1980).

Les services de téléphonie, développés d'abord autour des techniques de commutation de circuit, puis plus récemment proposés sur des réseaux IP, sont un exemple de ce renouvellement. On conçoit aujourd'hui des réseaux intégrés performants, offrant des services de transport de la voix et de données, fonctionnant entièrement selon le protocole IP.

Toutefois, les impératifs économiques et techniques sous-jacents imposent un mode d'évolution sans rupture, de sorte qu'un saut de technologie n'est pas raisonnablement envisageable. Il convient de considérer une étape intermédiaire au cours de laquelle se développeront des réseaux hétérogènes, résultant de l'interconnexion de réseaux d'autocommutateurs traditionnels (PABX, "Private Automatic Branch eXchange") à des réseaux fonctionnant entièrement selon le protocole IP. Une architecture permettant de déployer des services de téléphonie IP est décrite dans le document "An architecture for residential intemet telephony service", HUITEMA C et al. (IEEE NETWORKS, IEEE INC, vol. 13, no. 3 mai 1999).

De tels réseaux hétérogènes peuvent par exemple comprendre un ou plusieurs réseaux locaux (LAN, "Local Area Networks") fonctionnant selon le protocole IP, interconnectés à un ou plusieurs réseaux traditionnels de PABX qui forment un réseau dit "multi-sites".

Un réseau de PABX intègre en général un ensemble d'applications de téléphonie parmi lesquelles une application de supervision des chemins de communication. Pour chaque communication admise par la topologie du réseau, une telle application détermine, en fonction de données de description topologique du réseau auxquelles elle a accès et de paramètres d'entrée propres à la communication, un chemin de communication qui pourra ensuite être réservé puis utilisé.

La détermination d'un tel chemin, plus précisément le choix des noeuds topologiques qui se succèdent le long du chemin, s'effectue de préférence indépendamment de la technologie utilisée pour former chacune des artères reliant ces noeuds. Le processus ne descend pas sous la couche réseau dans le modèle de référence OSI. Par exemple, il est indifférent pour l'application de supervision des chemins de communication que le chemin entre deux noeuds emprunte une voie MIC à 64 kbit/s ou un LAN sous IP). Ensuite un processus de couche liaison se charge de mettre en oeuvre le chemin de communication, c'est-à-dire de réserver les ressources adéquates le long du chemin déterminé et de gérer l'usage de ces ressources.

Lors de la configuration du réseau de PABX, un logiciel d'administration de réseau permet de déclarer les artères susceptibles de transporter un trafic de type déterminé. Les paramètres de cette déclaration comprennent notamment le type d'artère, les noeuds topologiques correspondants, les paramètres de transport du trafic voix (notamment les lois de codage), etc. La topologie du réseau de PABX est donc connue de certaines au moins des applications du réseau, en particulier des applications de supervision et de mise en oeuvre des chemins de communication.

Cette intelligence est absente des réseaux fonctionnant selon le protocole IP. En effet, dans un tel réseau, le routage des datagrammes, qu'ils transportent ou non de la voix, se fait par des mécanismes internes au réseau qui n'interagissent pas avec les applications clientes pour déterminer le chemin emprunté par chaque paquet. Seule l'adresse IP du destinataire est prise en compte. Le protocole RSVP («Resource ReSerVation Protocol», RFC 2205, IETF, Sept. 1997) destiné à augmenter la qualité de service offerte aux utilisateurs de réseaux IP n'apporte aucun changement puisqu'il s'appuie sur les mécanismes de routage IP, et reste un outil du réseau IP, à l'inverse des réseaux de PABX qui intègrent spécifiquement des outils de supervision et de mise en oeuvre des chemins.

Le succès des réseaux IP a conduit au développement d'applications de transport de la voix sur des réseaux IP, laissant entrevoir le remplacement à terme des réseaux traditionnels de PABX par des réseaux IP multi-services. La majorité des développeurs étudie des systèmes fonctionnant entièrement selon le protocole IP. Les solutions destinées aux réseaux hétérogènes, constitués pour une part d'un ou de plusieurs réseaux à transmission selon le protocole IP, et pour l'autre d'un ou plusieurs réseaux de PABX sont peu étudiées.

Un but de la présente invention est d'améliorer l'interaction entre les différents types de réseaux composant un système hétérogène de communication, afin d'optimiser l'utilisation des ressources globales du réseau.

La présente invention propose ainsi un procédé d'établissement de chemins de communication entre des points d'accès d'un système de communication, le système de communication comprenant au moins un réseau de transmission de paquets procurant une première famille de points d'accès, des moyens de commutation équipés d'interfaces de raccordement procurant une seconde famille de points d'accès et d'au moins une interface passerelle avec le réseau de transmission de paquets, des moyens de traitement d'appel incluant au moins un serveur d'appel pour mémoriser des données de configuration et de contexte relatives à des terminaux reliés au système à travers les points d'accès et pour effectuer des traitements de signalisation concernant lesdits terminaux, et au moins un gestionnaire de configuration d'appel coopérant avec les moyens de traitement d'appel pour sélectionner un mode d'établissement de chemin de communication parmi un premier mode gouverné par des mécanismes du réseau de transmission de paquets et un second mode gouverné par des mécanismes des moyens de commutation. Les mécanismes des moyens de commutation gouvernant le second mode exploitent des données prédéfinies décrivant une topologie du système de communication composée de noeuds topologiques appartenant aux moyens de commutation et de chemins topologiques admis au sein des moyens de commutation entre des paires de noeuds topologiques. On associe à chaque point d'accès un noeud topologique de référence respectif appartenant aux moyens de commutation, de façon que le noeud topologique de référence de chaque point d'accès de la seconde famille soit accessible dudit point d'accès sans passer par le réseau de transmission de paquets. L'établissement d'un chemin de communication entre des points d'accès pour mettre en liaison des premier et second terminaux respectivement reliés auxdits points d'accès comprend les étapes suivantes :
- création d'une première tâche de traitement d'appel dans un serveur d'appel associé au premier terminal;
- formation, par la première tâche de traitement d'appel, d'un message d'établissement incluant au moins un numéro du premier terminal, une indication de la famille du point d'accès auquel est relié le premier terminal et le noeud topologique de référence dudit point d'accès ;
- en réponse à la réception dudit message d'établissement, création d'une seconde tâche de traitement d'appel dans un serveur d'appel associé au second terminal; et
- interrogation du gestionnaire de configuration par la seconde tâche de traitement d'appel, sur la base des familles et des noeuds topologiques de référence des points d'accès auxquels sont respectivement reliés les premier et second terminaux, pour obtenir des données de configuration d'appel indiquant le mode d'établissement sélectionné pour le chemin dé communication entre lesdits points d'accès.

Ainsi, la connaissance par l'administrateur du système de la topologie d'un réseau de PABX peut être utilement exploitée à l'échelle du système hétérogène selon l'invention. L'administrateur dispose d'une grande souplesse pour faire évoluer son installation existante, généralement composée de PABX classiques, en y adjoignant des sous-réseaux fonctionnant selon le protocole IP. Il peut configurer son système de façon à utiliser les mécanismes d'établissement et de supervision de chemin du monde PABX ou ceux propres au monde IP. Il peut ainsi envisager la migration progressive de son installation vers une architecture IP.

En particulier, les mécanismes du premier mode (PABX) peuvent être privilégiés sélectivement dans certaines configurations d'appel en admettant dans la topologie au moins un chemin topologique entre deux noeuds topologiques ayant une portion appartenant au réseau de transmission de paquets, tandis qu'au moins un autre chemin topologique entre deux noeuds topologiques ayant une portion appartenant au réseau de transmission de paquets n'est pas admis afin de privilégier les mécanismes du premier mode IP entre les terminaux reliés aux points d'accès associés à ces derniers noeuds.

Un autre aspect de la présente invention se rapporte à un système de communication comprenant un réseau de transmission de paquets procurant une première famille de points d'accès, des moyens de commutation équipés d'interfaces de raccordement procurant une seconde famille de points d'accès et d'au moins une interface passerelle avec le réseau de transmission de paquets, des moyens de traitement d'appel pour mémoriser des données de configuration et de contexte relatives à des terminaux reliés au système à travers les points d'accès et pour effectuer des traitements de signalisation concernant lesdits terminaux, et au moins un gestionnaire de configuration d'appel coopérant avec les moyens de traitement d'appel conformément à un procédé tel que défini ci-dessus pour sélectionner un mode d'établissement de chemin de communication parmi un premier mode gouverné par des mécanismes du réseau de transmission de paquets et un second mode gouverné par des mécanismes des moyens de commutation.

D'autres particularités et avantages de l'invention apparaîtront dans la description ci-après d'exemples de réalisation non limitatifs, en référence aux dessins annexés, dans lesquels :
- la figure 1 est un schéma d'un système de communication selon l'invention ;
- la figure 2 illustre les flux de signalisation lors de l'établissement d'un appel entre deux terminaux conformément à l'invention;
- les figures 3 et 4 sont des organigrammes de procédures exécutables par un serveur de topologie conformément à l'invention.

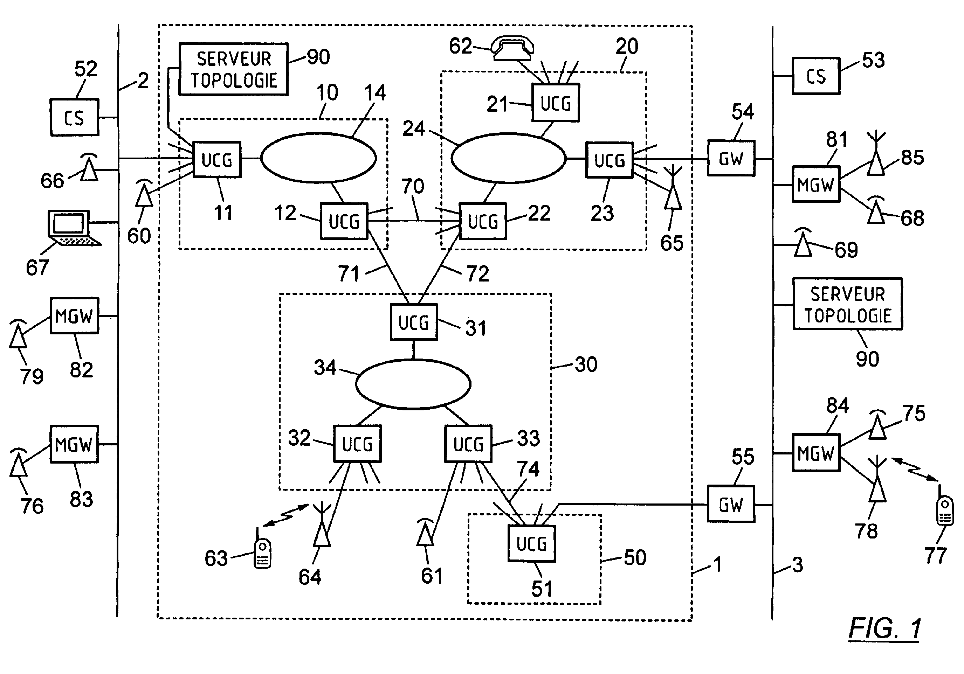

La figure 1 montre, à titre illustratif, un exemple de système de communication comprenant un réseau à commutation de circuit 1 constitué de quatre autocommutateurs (PABX) 10, 20, 30, 50. Chaque PABX a une organisation en grappes. Il comprend ainsi une ou plusieurs unités de contrôle de grappe (UCG) 11-12, 21-23, 31-33, 51 comportant chacune un ensemble de points d'accès au système. Les points d'accès peuvent servir d'interface avec différents types de lignes, selon les compatibilités désirées du système. On peut notamment prévoir des points d'accès pour le raccordement de terminaux de téléphonie classiques 60-62, analogiques (terminaux S63 simples ou terminaux "intelligents") ou numériques (terminaux X.25, RNIS...). Pour éventuellement permettre des communications avec des terminaux mobiles 63 (par exemple CT2 ou DECT), certaines des UCG peuvent comporter des points d'accès radio reliés à des bornes radio respectives 64, 65.

Chaque UCG possède des ressources suffisantes pour supporter les communications entre ses propres points d'accès, en particulier un serveur d'appel.

Chaque PABX 10, 20, 30 comportant plusieurs UCG est équipé d'une boucle de transport 14, 24, 34 permettant les échanges inter-UCG de manière à supporter les communications entre plusieurs points d'accès appartenant à ce PABX. A titre d'exemple, la boucle 14, 24, 34 peut être une ligne numérique à 40 Mbit/s organisée en temps partagé pour supporter 512 canaux à commutation de circuits ("canaux circuits") et 70 canaux à commutation de paquets ("canaux paquets"). Les canaux circuits sont prévus pour les points d'accès dont le fonctionnement requiert la réservation d'une ressource circuit, tandis que les canaux paquets sont prévus pour les points d'accès utilisés par des communications à commutation de paquets et pour les échanges de commandes propres au système de commutation (notamment les fonctions de signalisation). Des unités de contrôle non représentées sont prévues dans les PABX 10, 20, 30 pour superviser le fonctionnement des boucles de transport 14, 24, 34.

Lorsque le système comporte plusieurs PABX, des lignes inter-PABX 70-72, 74 (par exemple des lignes MIC privées ou louées à un opérateur public) sont éventuellement prévues entre certaines de leurs UCG 12, 22, 31, 33,51.

Dans l'exemple représenté, le réseau de PABX 1 coopère avec deux réseaux locaux (LAN) 2, 3 supportant le protocole IP. Ceci forme un réseau global hétérogène : les LAN, qui transmettent des paquets coexistent avec les PABX qui, du moins en ce qui concerne le trafic de voix, commutent des circuits.

Le PABX 10 est relié au LAN 2 par un point d'accès de son UCG 11. De telles UCG, dites « UCG passerelle », sont pourvues d'une ou plusieurs interfaces passerelles ayant chacune une adresse déterminée dans le réseau IP. L'interconnexion entre les réseaux 1 est 3 est réalisée au moyen d'interfaces passerelles 54, 55 (GW) reliées aux UCG 23, 51. Ces interfaces passerelles 54, 55 sont externes aux UCG 23, 51 mais fonctionnellement semblables à celles incorporées l'UCG 11. Elles sont par exemple conformes à la norme H.323 de l'UIT-T. Le fonctionnement des passerelles H.323 a été détaillé au cours des travaux du projet TIPHON («Telecommunications and Internet Protocol Harmonisation Over Networks ») de l'ETSI (« European Telecommunication Standard Institute »). Le modèle H.323 définit trois entités : le garde-barrière («gatekeeper »), la passerelle («gateway » ou GW), et le terminal. Les fonctions de la passerelle de H.323 sont distribuées sur trois modules : la passerelle de signalisation (« Signalling Gateway » ou SG), la passerelle de média (« Media GateWay » ou MGW), et le contrôleur de passerelle de média (« Media GateWay Controller » ou MGC). La passerelle de média convertit des flux provenant d'un premier type de réseau vers un format correspondant à un second type de réseau. Les traitements de signalisation concernant l'établissement d'une communication à travers la passerelle de média sont effectués par le contrôleur de passerelle MGC.

Différents terminaux 66, 67, 69, dits « terminaux IP », sont directement connectés aux LAN 2, 3 et sont gérés par deux serveurs d'appel 52, 53 respectivement reliés aux LAN 2, 3. Les serveurs d'appel 52, 53 peuvent opérer selon des protocoles normalisés, par exemple conformément à la norme H.323. Un terminal IP est par exemple un terminal téléphonique 66, 69 incorporant une interface IP ou encore un micro-ordinateur 67 exécutant une application de téléphonie sur réseau IP, par exemple de type poste opérateur.

D'une manière connue en soi, des terminaux classiques 68, 75-77, 79 peuvent être raccordés aux LAN 2, 3 par l'intermédiaire de passerelles de média (MGW) 81-84, éventuellement pilotées par des contrôleurs de passerelle de média (MGC) (non représentés sur la figure 1) supportant des protocoles tels que Megaco (voir « Megaco Protocol », Internet Draft, IETF, 21 février 2000). Ces terminaux sont par exemple de type S.63 (68, 75) ou RNIS (76, 79) ou encore des terminaux sans fil (77) qui se connectent par l'intermédiaire de bornes radio 78, 85 reliées à certaines MGW 81, 84. Bien que ceci ne soit pas obligatoire, il est commode que ces terminaux classiques 68, 75-77, 79 soient gérés par les serveurs d'appel 52, 53 reliés aux LAN.

Une MGW 81-84 est capable de commuter des circuits entre les terminaux classiques qui lui sont directement reliés. La logique de définition des chemins entre ces terminaux classiques est donc plus proche de celle en vigueur dans le réseau de PABX que de celle du réseau IP 2, 3 (acheminement de datagrammes de type « best effort »). Dans la configuration du système, on distingue deux familles de points d'accès :
- les points d'accès « classiques » offerts par les UCG 11-12, 21-23, 31-33, 51 et par les MGW 81-84, auxquels sont reliés des terminaux classiques 60-63, 68, 75-77, 79. Les mécanismes de supervision et de mise en oeuvre des chemins de communication prévus dans les PABX 10, 20, 30, 50 s'appliquent habituellement à ces points d'accés;
- les points d'accès «IP» procurés par les LAN 2, 3, auxquels sont reliés des terminaux IP 66, 67, 69. Au niveau de ces points d'accès, ce sont les mécanismes propres au réseau IP (routage IP, le cas échéant RSVP, H.323/TCP/IP) qui permettent l'établissement des chemins de communication.

A titre d'exemple, la signalisation est transmise sur le réseau IP conformément à la norme UIT-T H.323 dans des sessions du protocole de transport TCP établies entre deux serveurs d'appel ou entre un terminal IP et son serveur d'appel.

Pour la transmission de la parole codée sur les sous-réseaux IP 2, 3, on utilise, comme il est usuel, le protocole de transport UDP (« User Datagram Protocol », RFC 768, IETF, août 1980) et les protocoles temps réel RTP et RTCP. Différents modes de codage/décodage de la parole peuvent être utilisés par les terminaux IP 66, 67, 69. Dans le cas de H.323, le codage audio peut être conforme à l'une des Recommandations G.711, G.722, G.723.1, G.728 et G.729 de l'UIT-T.

Chaque serveur d'appel du système gère un ensemble de terminaux clients. Chaque client dispose d'informations d'identification du serveur d'appel qui lui est associé, auquel il adresse ses requêtes.

Un terminal IP 66, 67, 69 directement raccordé à un LAN 2, 3 ne connaît a priori que l'adresse IP de son serveur d'appel 52, 53, ou d'une passerelle (gatekeeper H.323) lui permettant d'atteindre ce serveur si celui-ci est situé dans le réseau de PABX 1.

Un terminal classique raccordé au réseau de PABX connaît quant à lui une UCG (« UCG de référence ») qu'il sait toujours joindre et qui incorpore le serveur d'appel associé. Cette UCG de référence est avantageusement choisie comme étant celle à laquelle le terminal est directement raccordé (sinon, en particulier s'il s'agit d'un terminal mobile 63, il peut l'atteindre par l'intermédiaire des canaux paquets du réseau de PABX).

Le serveur d'appel associé à un terminal classique 68, 75-77, 79 raccordé à un LAN 2, 3 par l'intermédiaire d'une MGW 81-84 peut être (i) situé dans cette MGW (si celle-ci comporte de telles fonctionnalités), (ii) un serveur 52, 53 du LAN ou (iii) dans une UCG du réseau multi-site 1. Dans le cas (i), le terminal accède directement à son serveur d'appel. Dans les cas (ii) et (iii), la MGW se charge de relayer la signalisation qui le concerne depuis et vers le serveur d'appel, éventuellement par l'intermédiaire d'un MGC et/ou d'une passerelle 54, 55.

La notion de noeud topologique d'un réseau correspond en général à un équipement physique auquel est raccordé au moins un guide physique (câble physique, fibre optique, interface air, etc.) sur lequel peut transiter un flux de communication. Un lien topologique correspond à un guide physique sur lequel peut transiter un flux de communication entre deux noeuds d'extrémité. Deux noeuds topologiques sont dits «voisins» lorsqu'ils sont directement reliés par un lien topologique, sans l'intermédiaire d'un noeud topologique supplémentaire. Un chemin topologique entre deux noeuds topologiques d'extrémité non nécessairement voisins consiste en une succession de liens topologiques permettent de proche en proche de relier ces noeuds. Deux noeuds topologiques distincts sont dits « connexes » s'il existe au moins un chemin topologique dont ils sont les noeuds d'extrémité.

Les applications du réseau de PABX 1 qui se chargent de la supervision et de la mise en oeuvre des chemins de communication exploitent une topologie définie par configuration du système, composée de noeuds, liens et chemins topologiques. Dans une réalisation typique, les noeuds topologiques du réseau 1 considérés lors de la configuration du système sont des UCG (ils pourraient aussi être des PABX ou des interfaces).

L'invention prévoit de pouvoir déclarer comme noeuds topologiques des équipements qui ne sont accessibles du réseau de PABX qu'en passant par le réseau IP, bien que l'administrateur du réseau 1 n'ait a priori aucune connaissance de la topologie des LAN 2, 3. Ces équipements sont typiquement les MGW 81-84 qui assurent un service de type circuit aux terminaux qui leur sont raccordés.

Des chemins topologiques dont un noeud d'extrémité consiste en une MGW 81-84 peuvent ainsi être admis dans la topologie prise en compte par les applications de supervision et de mise en oeuvre des chemins de communication du réseau de PABX.

En revanche, il sera généralement préférable de ne pas admettre dans des chemins topologiques entre deux MGW directement reliées entre elles par un LAN puisque les mécanismes IP sont bien adaptés aux appels qui les mettent toutes deux en jeu.

Des chemins topologiques entre deux MGW pourront toutefois être admis, notamment dans le cas particulier (qui n'est pas le plus fréquent) où le réseau IP comporte plusieurs sous-réseaux (LAN) non connexes. Par exemple, dans le cas de la figure 1, il est préférable de ne pas admettre de chemin topologique entre les MGW 81 et 84 ni entre les MGW 82 et 83, alors qu'il vaut mieux admettre un chemin topologique entre les MGW 82 (ou 83) et 81 (ou 84). L'administrateur du système dispose d'une grande souplesse dans la définition de ces chemins.

Selon l'invention, chaque point d'accès du système est associé à un noeud topologique d'un réseau de PABX, dit noeud topologique de référence.

Chaque point d'accès «classique » du réseau de PABX 1 est avantageusement associé au noeud topologique de référence correspondant à son UCG. Par exemple, les UCG 11, 21, 32 et 33 sont les noeuds topologiques de référence des points d'accès auxquels sont respectivement reliés les terminaux 60, 62, 63 et 61.

De même, les autres points d'accès classiques procurés par les MGW 81-84 reliés aux LAN 2, 3 sont associés aux noeuds topologiques de référence correspondant respectivement à ces MGW 81-84. En d'autres termes, tout dispositif passerelle de media (MGW) du système est considéré comme un noeud topologique du réseau 1, et est déclaré comme noeud topologique de référence de ses points d'accès.

Pour un point d'accès direct à un LAN, où est raccordé un terminal IP 66, 67, 69, le noeud topologique de référence peut être une MGW reliée au même LAN, et avantageusement située à proximité du point d'accès. Ce noeud topologique de référence peut aussi être une UCG du réseau 1 équipée d'une passerelle avec le même LAN. En particulier, si le serveur d'appel d'un terminal IP correspond à un serveur d'appel d'une UCG passerelle 11, il est commode que celle-ci soit le noeud topologique de référence du point d'accès de ce terminal.

La correspondance entre chaque point d'accès auquel est relié un terminal du système et son noeud topologique de référence est une des données stockées pour le terminal dans son serveur d'appel, par exemple au moyen d'une table de correspondance (« look-up table »). Cela permet d'éviter que les terminaux aient à connaître des données relatives au noeud topologique de référence de leurs points d'accès.

Dans l'exemple représenté sur la figure 1, le système comporte deux serveurs de topologie 90, l'un relié à un point d'accès de l'UCG 11 du PABX 10, et l'autre directement relié au réseau LAN 3. Ces deux serveurs contiennent essentiellement les mêmes données et ils exécutent les mêmes procédures décrites plus loin, l'un ou l'autre étant interrogé selon le serveur d'appel qui l'interroge. On notera que de nombreuses autres implémentations seraient possibles, par exemple prévoir un seul serveur de topologie accessible depuis l'ensemble du système, ou un serveur de topologie pour chaque sous-réseau 1, 2, 3, ou encore réaliser le serveur de topologie sous forme de tables simplement mémorisées dans chaque serveur d'appel susceptible de l'interroger.

Dans le cas particulier où le réseau IP 2, 3 n'est pas totalement connexe (comme sur la figure 1), le serveur de topologie 90 contient en outre une table à double entrée dite « table des chemins IP » dans laquelle sont consignés des couples d'adresses IP de terminaux et de passerelles entre lesquelles il existe un chemin de communication entièrement supporté par la partie IP du système. Avantageusement, on utilise une notion de communauté, définie comme un ensemble d'adresses IP. Cela permet de limiter les dimensions de la table des chemins IP qui contient alors des couples de communautés. Dans l'exemple de la figure 1, on peut ainsi définir deux communautés, chacune constituée des adresses IP des LAN 2 et 3.

L'établissement d'un appel téléphonique entre deux terminaux d'abonnés est initialisé par une phase de signalisation d'appel au cours de laquelle le chemin qu'emprunteront les signaux de parole est déterminé.

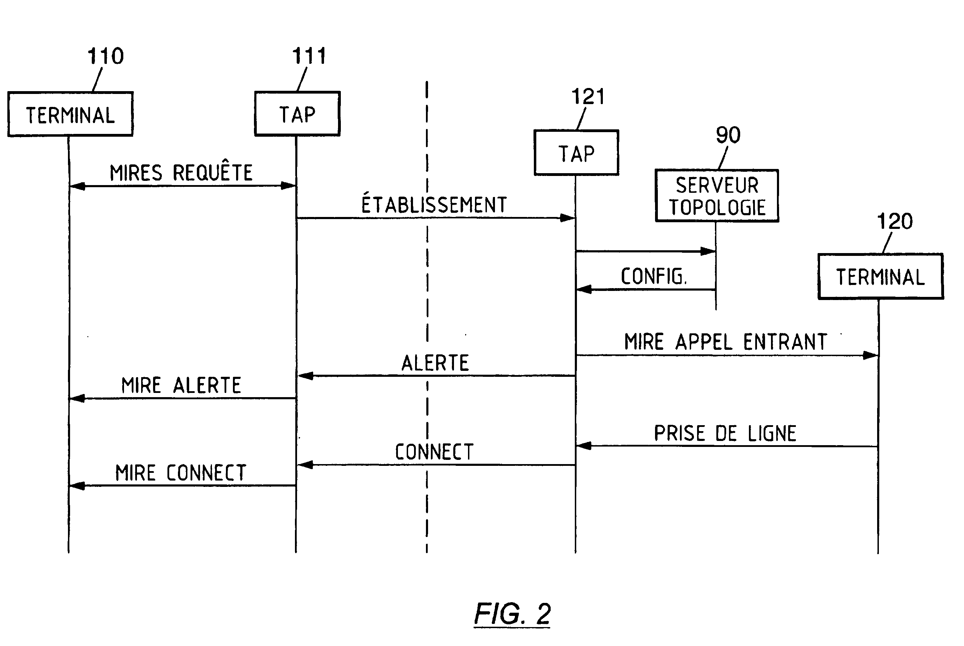

Dans le diagramme de la figure 2, les traitements de signalisation concernant un terminal (demi-appel) sont gérés par une tâche de traitement d'appel (TAP) exécutée par le serveur d'appel du terminal.. La partie gauche de chaque diagramme correspond au demi-appel demandeur, et la partie droite au demi-appel demandé.

La signalisation d'appel commence par un échange d'informations entre le terminal appelant 110 et la tâche de traitement d'appel 111 qui lui correspond. Cette tâche 111 a par exemple été créée par le serveur d'appel du terminal appelant 110 à réception d'un message signalant la prise de ligne par ce terminal. Elle adresse au terminal les mires codant les informations à présenter à l'utilisateur (affichages, tonalités, ...), et récupère les données fournies par l'utilisateur pour définir sa requête (choix de fonctions, numérotation, ...). Lorsqu'elle dispose d'informations suffisantes, le serveur d'appel diffuse dans le système un message d'établissement (SET_UP), comportant notamment les éléments suivants :
- le numéro d'annuaire du terminal appelé 120, défini directement ou indirectement par l'utilisateur du terminal appelant 110 ;
- le type de raccordement du terminal appelant, figurant dans les tables de son serveur d'appel exécutant la tâche TAP 111 ; cet élément permet en particulier de distinguer les terminaux reliés aux points d'accès « classiques » et ceux reliés aux points d'accès IP ;
- le noeud topologique de référence du point d'accès du terminal appelant, connu de son serveur d'appel comme indiqué précédemment ;
- pour un terminal appelant de type classique, un numéro d'équipement physique correspondant désignant l'interface du PABX à laquelle le terminal est relié ;
- pour un terminal appelant de type IP, une indication des codages et des débits avec lesquels il est compatible (par exemple G.711 seulement ou G.711 +G.723.1);
- pour un terminal appelant de type IP, l'adresse IP du terminal dans le réseau 2, 3, un numéro de port UDP qu'il consacre à la transmission de phonie selon le protocole RTP et un autre numéro de port UDP pour la transmission des informations de contrôle selon le protocole RTCP.

Les serveurs d'appel vers lesquels ce message est diffusé analysent le numéro du terminal appelé. Le seul serveur d'appel qui prend en compte le message, en créant une tâche 121 de traitement du demi-appel côté arrivée (TAP), est celui du terminal appelé. Cette tâche 121 interroge un serveur de topologie 90 pour déterminer une configuration de l'appel.

Le serveur de topologie 90 est interrogé sur la base de deux jeux de paramètres, l'un relatif au terminal appelant 110 et l'autre relatif au terminal appelé 120. Chaque jeu de paramètres relatif à un terminal comprend :
- le type de raccordement du terminal, c'est-à-dire la famille (classique ou IP) de son point d'accès ;
- l'identité du noeud topologique de référence du point d'accès du terminal.

Pour le terminal appelant, ces paramètres sont obtenus par la tâche TAP 121 dans le message d'établissement reçu. Pour le terminal appelé, ils sont lus par la tâche 121 dans les données propres au terminal stockées dans le serveur d'appel, au moyen du numéro d'annuaire obtenu dans le message d'établissement reçu.

Le serveur de topologie 90 retourne au serveur d'appel une indication d'un mode d'établissement sélectionné pour définir le chemin de communication. Deux modes sont possibles : l'un (« mode IP ») dans lequel les mécanismes du réseau IP gouvernent la mise en place du chemin, l'autre (« mode PABX ») dans lequel les mécanismes du réseau de PABX gouvernent cette mise en place.

Dans le premier cas, les tâches TAP coopèrent pour obtenir les adresses IP à mettre en correspondance. L'une ou l'autre de ces adresses peut être déjà disponible si c'est celle du terminal appelant ou appelé de type IP. Si l'usage d'une passerelle est nécessaire du côté appelant ou du côté appelé, le serveur d'appel correspondant réserve des ressources de cette passerelle (numéros de port UDP) puis fournit à son homologue l'adresse IP et les ressources réservées de cette passerelle. Les tâches TAP fournissent alors les adresses IP et ports UDP pertinents aux terminaux ou passerelles qu'elles supervisent pour que la communication puisse se dérouler selon les mécanismes IP usuels.

Dans le second cas, les tâches TAP coopèrent pour obtenir les adresses physiques de noeuds topologiques à mettre en correspondance. Dans le cas d'un terminal IP, ce noeud n'est pas nécessairement le noeud topologique de référence du point d'accès : il correspond à une passerelle identifiée par le serveur d'appel sur la base du noeud de référence de l'autre terminal (par exemple, si le terminal classique 61 appelle le terminal IP 69, la tâche TAP exécutée par le serveur 53 pour le côté appelé fournira l'adresse physique d'une passerelle 54 ou 55 qui permet d'atteindre l'UCG 33 du terminal appelant 61 et non celle de la MGW 81 formant le noeud de référence du terminal 69). Les applications qui supervisent et mettent en oeuvre les chemins de communication dans le réseau de PABX 1 se chargent alors de réserver puis d'activer les ressources nécessaires à la communication en cours d'établissement. Une fois la communication établie, elles continuent à superviser le chemin de communication pour signaler les événements pertinents aux serveurs d'appels.

Une fois que la tâche TAP du côté appelé dispose des informations nécessaires, elle envoie au terminal appelé 120, s'il est disponible, la mire indiquant l'appel entrant, et elle retourne à la tâche TAP 111 du côté appelant un message d'alerte pour signaler le début de sonnerie au terminal appelé. Ce message d'alerte est retransmis sous forme d'une mire au terminal appelant 110. Lorsque le terminal appelé prend la ligne, l'événement est signalé à la tâche TAP 121 qui en informe la tâche TAP 111 dans un message de connexion retransmis sous forme d'une mire au terminal appelant 110. La communication peut alors se dérouler de façon conventionnelle. Lorsque l'un des terminaux est raccroché, l'autre en est informé par l'intermédiaire des tâches TAP 111, 121 avant que celles-ci se retirent.

Le serveur de topologie peut aussi être interrogé par le serveur d'appel du coté appelant en cas de réception d'un message de demande de transfert (« TRANSFER »).

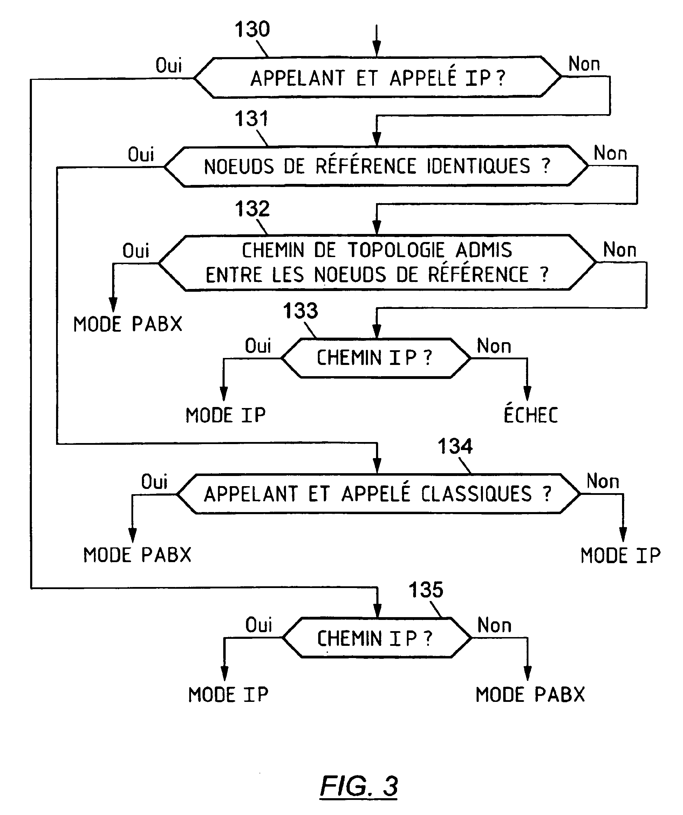

La figure 3 montre une procédure applicable par le serveur de topologie pour répondre au serveur d'appel qui l'interroge en produisant les deux jeux de paramètres précités.

Une première étape 130 de cette procédure consiste en un test afin de vérifier si le raccordement de chacun des terminaux appelant et appelé est de type IP. Dans l'affirmative, le serveur de topologie interroge éventuellement la table des chemins IP lors d'une étape 135, sur la base des adresses IP des terminaux ou, le cas échéant, de leurs numéros de communauté, ce qui permet de s'assurer qu'un chemin de communication IP peut être construit entre les deux terminaux. Si le couple d'entrée ne figure pas dans la table des chemins IP (le test 135 d'existence d'un chemin IP échoue), le serveur de topologie 90 sélectionne le mode PABX et répond en conséquence au serveur d'appel. Si le test 135 est positif (ou si le réseau IP est connexe), il sélectionne au contraire le mode IP.

Si l'un au moins des points d'accès des terminaux est de type classique (d'après le test 130), le serveur 90 détermine si les noeuds topologiques de référence des deux points d'accès sont identiques (test 131). En cas d'identité, le mode d'établissement sélectionné dépend du point de savoir, au test 134, si les points d'accès des terminaux appelant et appelé sont tous deux de type classique. Dans l'affirmative, le serveur de topologie sélectionne le mode PABX. Sinon, il sélectionne le mode IP.

Si les noeuds topologiques de référence des points d'accès des terminaux appelant et appelé sont différents d'après le test 131, le serveur 90 examine à l'étape 132 si le chemin topologique entre les deux noeuds topologiques en question est admis dans la topologie définie lors de la configuration du système. S'il l'est, le mode PABX est sélectionné. Sinon, le serveur 90 interroge éventuellement la table des chemins IP à l'étape 133, sur la base des adresses IP des terminaux ou de leurs numéros de communauté. Si le couple d'entrée ne figure pas dans la table des chemins IP (le test 133 échoue), le serveur de topologie 90 signale au serveur d'appel une impossibilité d'établissement du chemin de communication demandé. Un tel message d'erreur est utile à l'administrateur du système qui considérera ses occurrences comme révélatrices d'une erreur de configuration. Si le test 133 est positif (ou si le réseau IP est connexe), il sélectionne le mode IP.

L'invention prévoit, dans une variante, la possibilité pour chaque point d'accès du système de présenter préalablement à la demande d'établissement de l'appel du côté appelant, outre son type natif, un type complémentaire (IP pour un point d'accès classique, et classique pour un point d'accès IP).

Le serveur d'appel correspondant inscrit alors les paramètres relatifs à cette apparence dans une table de ressources. Cette table est renseignée dès qu'un terminal géré participe à un appel dont la configuration nécessite la réservation de ressources de chemin de communication lui donnant temporairement une apparence complémentaire, et mise à jour lors de la suppression du dernier contexte d'appel pour ce terminal. Un tel terminal présente ainsi une double apparence, l'une native, et l'autre virtuelle.

La table des ressources est consultée par la tâche de traitement d'appel du coté appelant avant l'envoi du message d'établissement d'appel. Ce message peut contenir, le cas échéant, les paramètres relatifs à la double apparence du terminal appelant. De même, sur réception du message d'établissement d'appel, le serveur d'appel du terminal appelé peut consulter sa table des ressources en vue de communiquer au serveur de topologie les paramètres relatifs à une éventuelle double apparence du terminal appelé. De cette manière, le message d'interrogation du serveur de topologie peut contenir, outre les éléments qui ont été décrits précédemment, les paramètres relatifs à la double apparence du point d'accès du terminal appelant et/ou à celle du point d'accès du terminal appelé, le cas échéant.

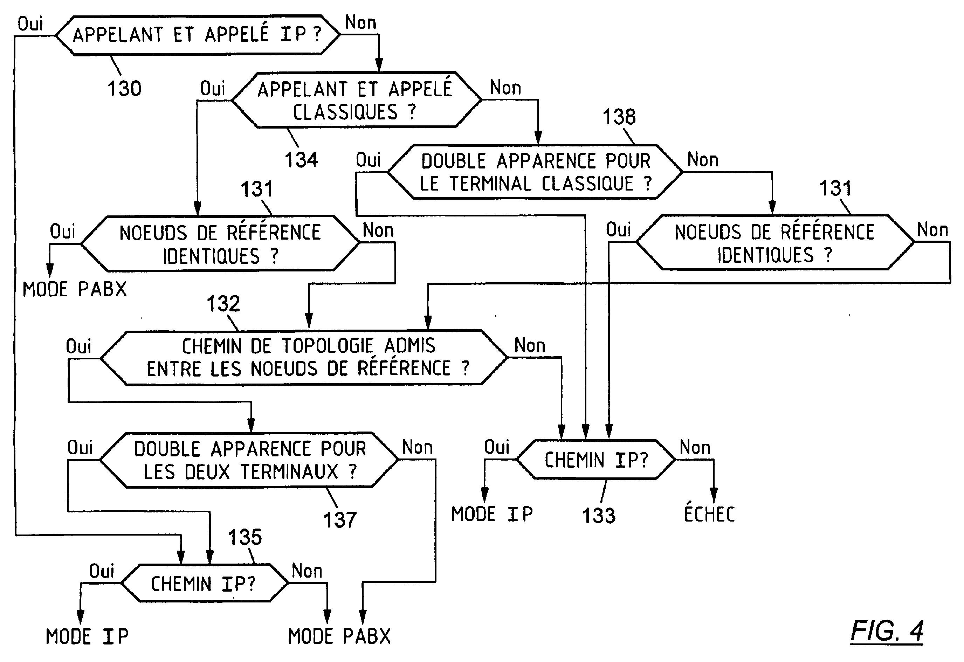

La réponse du serveur de topologie est alors déterminée selon la procédure illustrée par la figure 4.

La première étape 130 de cette procédure consiste en un test afin de vérifier si le raccordement des terminaux demandeur et demandé est de type IP. Si les point d'accès sont tous deux de type IP, le traitement de la requête est identique au cas précédent (test 135).

Si les terminaux ne sont pas tous deux de type IP, le test 134 relatif à leur type de raccordement est effectué afin de déterminer si leurs points d'accès sont tous deux de type classique. Si c'est le cas, les noeuds topologiques de référence des deux terminaux sont comparés lors du test 131. Si ces noeuds topologiques de référence sont identiques, le serveur 90 sélectionne le mode PABX. S'ils sont distincts, le test 132 est effectué afin de déterminer s'ils forment les noeuds d'extrémité d'un chemin topologique admis par la configuration.

Si ce test 132 est positif, un test supplémentaire 137 est effectué pour déterminer si les point d'accès des terminaux appelant et appelé ont tous deux une apparence complémentaire (dans ce cas de figure une apparence IP). Si c'est le cas, le serveur de topologie procède à l'étape 135 précitée pour déterminer s'il existe ou non un chemin IP que la communication peut emprunter. Dans l'affirmative, il sélectionne le mode IP. Sinon, il sélectionne le mode PABX, de même que si le test 137 est négatif.

Si le test 132 est négatif, le serveur de topologie 90 procède à l'étape 133 pour déterminer s'il existe ou non un chemin IP que la communication peut emprunter. Si ce test 133 est négatif, le serveur de topologie émet une réponse d'échec. S'il est positif, il sélectionne le mode IP.

Si les deux terminaux ont des points d'accès de types différents (test 134), l'un des deux est de type natif classique, et le serveur de topologie 90 vérifie au test 138 s'il présente une apparence complémentaire (dans ce cas IP). Si c'est le cas, le serveur de topologie procède à l'étape 133 précitée. Sinon, il vérifie si les noeuds topologiques de référence des points d'accès des terminaux sont identiques (test 131). En cas d'identité, il procède aussi à l'étape 133. Sinon, le serveur de topologie passe à l'étape 132 précitée.

## Revendications

1. Procédé d'établissement de chemins de communication entre des points d'accès d'un système de communication, le système de communication comprenant au moins un réseau de transmission de paquets (2,3) procurant une première famille de points d'accès, des moyens de commutation (1,81-84) équipés d'interfaces de raccordement procurant une seconde famille de points d'accès et d'au moins une interface passerelle avec le réseau de transmission de paquets, des moyens de traitement d'appel incluant au moins un serveur d'appel (11,12, 21-23,31-33, 51-53) pour mémoriser des données de configuration et de contexte relatives à des terminaux (60-63,66-69, 75-77,79) reliés au système à travers les points d'accès et pour effectuer des traitements de signalisation concernant lesdits terminaux, et au moins un serveur de topologie (90) coopérant avec les moyens de traitement d'appel pour sélectionner un mode d'établissement de chemin de communication parmi un premier mode gouverné par des mécanismes du réseau de transmission de paquets et un second mode gouverné par des mécanismes des moyens de commutation, dans lequel les mécanismes des moyens de commutation gouvernant le second mode exploitent des données prédéfinies décrivant une topologie du système de communication composée de noeuds topologiques appartenant aux moyens de commutation (1,81-84) et de chemins topologiques admis au sein des moyens de commutation entre des paires de noeuds topologiques, dans lequel on associe à chaque point d'accès un noeud topologique de référence respectif appartenant aux moyens de commutation, de façon que le noeud topologique de référence de chaque point d'accès de la seconde famille soit accessible dudit point d'accès sans passer par le réseau de transmission de paquets, dans lequel l'établissement d'un chemin de communication entre des points d'accès pour mettre en liaison des premier et second terminaux respectivement reliés auxdits points d'accès comprend les étapes suivantes :
- création d'une première tâche de traitement d'appel dans un serveur d'appel associé au premier terminal ;
- formation, par la première tâche de traitement d'appel, d'un message d'établissement incluant au moins un numéro du premier terminal, une indication de la famille du point d'accès auquel est relié le premier terminal et le noeud topologique de référence dudit point d'accès ;
- en réponse à la réception dudit message d'établissement, création d'une seconde tâche de traitement d'appel dans un serveur d'appel associé au second terminal ; et
- interrogation du serveur de topologie par la seconde tâche de traitement d'appel, sur la base des familles et des noeuds topologiques de référence des points d'accès auxquels sont respectivement reliés les premier et second terminaux, pour obtenir des données de configuration d'appel indiquant le mode d'établissement sélectionné pour le chemin de communication entre lesdits points d'accès.

2. Procédé selon la revendication 1, dans lequel les chemins topologiques admis dans la topologie du système de communication comprennent au moins un chemin topologique entre deux noeuds topologiques ayant une portion appartenant au réseau de transmission de paquets (2,3) et dans lequel au moins un autre chemin topologique entre deux noeuds topologiques ayant une portion appartenant au réseau de transmission de paquets n'est pas admis.

3. Procédé selon l'une quelconque des revendications précédentes, dans lequel, en réponse à son interrogation par la seconde tâche de traitement d'appel, le serveur de topologie (90) sélectionne le premier mode d'établissement de chemin de communication lorsque les points d'accès auxquels sont respectivement reliés les premier et second terminaux sont tous deux de la première famille et reliés entre eux par le réseau de transmission de paquets (2,3).

4. Procédé selon la revendication 3, dans lequel le réseau de transmission de paquets comporte au moins deux sous-réseaux distincts (2,3) reliés aux moyens de commutation (1) par des interfaces passerelles respectives, et dans lequel, en réponse à son interrogation par la seconde tâche de traitement d'appel, le serveur de topologie (90) sélectionne le second mode d'établissement de chemin de communication lorsque les points d'accès auxquels sont respectivement reliés les premier et second terminaux sont tous deux de la première famille et appartiennent à deux sous-réseaux distincts.

5. Procédé selon l'une quelconque des revendications précédentes, dans lequel, en réponse à son interrogation par la seconde tâche de traitement d'appel, le serveur de topologie (90) sélectionne le premier mode d'établissement de chemin de communication lorsque les points d'accès auxquels sont respectivement reliés les premier et second terminaux sont de familles différentes et ont des noeuds topologiques de référence identiques.

6. Procédé selon l'une quelconque des revendications précédentes, dans lequel, en réponse à son interrogation par la seconde tâche de traitement d'appel, le serveur de topologie (90) sélectionne le second mode d'établissement de chemin de communication lorsque les points d'accès auxquels sont respectivement reliés les premier et second terminaux sont tous deux de la seconde famille et ont des noeuds topologiques de référence identiques.

7. Procédé selon l'une quelconque des revendications précédentes, dans lequel, en réponse à son interrogation par la seconde tâche de traitement d'appel, le serveur de topologie (90) examine, lorsqu'au moins un des points d'accès auxquels sont respectivement reliés les premier et second terminaux est de la seconde famille tandis que les noeuds topologiques de référence desdits points d'accès sont différents, si un chemin topologique admis est défini entre lesdits noeuds topologiques de référence dans la topologie du système de communication.

8. Procédé selon la revendication 7, dans lequel le serveur de topologie (90) sélectionne le premier mode d'établissement de chemin de communication lorsqu'il détermine qu'aucun chemin topologique admis n'est défini entre lesdits noeuds topologiques de référence dans la topologie du système de communication.

9. Procédé selon la revendication 7 ou 8, dans lequel le serveur de topologie (90) sélectionne le second mode d'établissement de chemin de communication lorsqu'il détermine qu'un chemin topologique admis est défini entre lesdits noeuds topologiques de référence dans la topologie du système de communication.

10. Procédé selon l'une quelconque des revendications 7 à 9, dans lequel le réseau de transmission de paquets comporte au moins deux sousréseaux distincts (2,3) reliés aux moyens de commutation (1) par des interfaces passerelles respectives, et dans lequel le serveur de topologie (90) signale une impossibilité d'établissement du chemin de communication lorsqu'il détermine qu'aucun chemin topologique admis n'est défini entre lesdits noeuds topologiques de référence dans la topologie du système de communication tandis que le point d'accès auquel est relié l'un des premier et second terminaux est relié à une interface passerelle avec l'un des sous-réseaux et que le point d'accès auquel est relié l'autre terminal appartient à un autre des sous-réseaux ou est relié à une interface passerelle avec un autre des sous-réseaux par l'intermédiaire des moyens de commutation.

11. Procédé selon l'une quelconque des revendications précédentes, dans lequel le réseau de transmission de paquets (2,3) fonctionne selon le protocole IP.

12. Système de communication comprenant un réseau de transmission de paquets (2,3) procurant une première famille de points d'accès, des moyens de commutation (1,81-84) équipés d'interfaces de raccordement procurant une seconde famille de points d'accès et d'au moins une interface passerelle avec le réseau de transmission de paquets, des moyens de traitement d'appel pour mémoriser des données de configuration et de contexte relatives à des terminaux reliés au système à travers les points d'accès et pour effectuer des traitements de signalisation concernant lesdits terminaux, et au moins un serveur de topologie (90) coopérant avec les moyens de traitement d'appel agencés pour mettre en oeuvre un procédé selon l'une quelconque des revendications précédentes pour sélectionner un mode d'établissement de chemin de communication parmi un premier mode gouverné par des mécanismes du réseau de transmission de paquets et un second mode gouverné par des mécanismes des moyens de commutation.

## Claims

1. A method for establishing communication paths between access points of a communication system, the communication system including at least one packet transmission network (2, 3) providing a first family of access points, switching means (1, 81-84) equipped with connection interfaces providing a second family of access points and at least one gateway interface with the packet transmission network, call processing means including at least one call server (11,12, 21-23, 31-33, 51-53) to store configuration data and context data relating to terminals (60-63, 66-69, 75-77, 79) connected to the system via the access points and to perform processing of signaling relating to said terminals, and at least one topology server (90) cooperating with the call processing means to select a communication path establishment mode from a first mode governed by mechanisms of the packet transmission network and a second mode governed by mechanisms of the switching means,
wherein the mechanisms of the switching means governing the second mode exploit predefined data describing a topology of the communication system made up of topological nodes belonging to the switching means (1, 81-84) and admitted topological paths within the switching means between pairs of topological nodes,
wherein a respective reference topological node belonging to the switching means is associated with each access point, such that the reference topological node of each access point of the second family is accessible from said access point without passing via the packet transmission network,
wherein establishment of a communication path between access points to place in communication the first and second terminals respectively connected to said access points includes the steps of :
- creating a first call processing task in a call server associated with the first terminal;
- forming, at the first call processing task, an establishment message including at least a number of the first terminal, an indication of the family of the access point to which the first terminal is connected and the reference topological node of said access point;
- in response to reception of said establishment message, creating a second call processing task in a call server associated with the second terminal; and
- querying the topology server from the second call processing task, on the basis of the families and the reference topological nodes of the access points to which the first and second terminals are respectively connected, to obtain call configuration data indicating the establishment mode selected for the communication path between said access points.

2. The method as claimed in claim 1, wherein the topological paths admitted within the communication system topology include at least one topological path between two topological nodes having one part belonging to the packet transmission network (2, 3) and wherein at least one other topological path between two topological nodes having one part belonging to the packet transmission network is not admitted.

3. The method as claimed in any one of the preceding claims, wherein, in response to the querying from the second call processing task, the topology server (90) selects the first communication path establishment mode when the access points to which the first and second terminals are respectively connected are both from the first family and interconnected by the packet transmission network (2, 3).

4. The method as claimed in claim 3, wherein the packet transmission network includes at least two separate sub-networks (2, 3) connected to the switching means (1) by respective gateway interfaces, and wherein, in response to the querying from the second call processing task, the topology server (90) selects the second communication path establishment mode when the access points to which the first and second terminals are respectively connected are both from the first family and belong to two separate sub-networks.

5. The method as claimed in any one of the preceding claims, wherein, in response to the querying from the second call processing task, the topology server (90) selects the first communication path establishment mode when the access points to which the first and second terminals are respectively connected are from different families and have identical reference topological nodes.

6. The method as claimed in any one of the preceding claims, wherein, in response to the querying from the second call processing task, the topology server (90) selects the second communication path establishment mode when the access points to which the first and second terminals are respectively connected are both from the second family and have identical reference topological nodes.

7. The method as claimed in any one of the preceding claims, wherein, in response to the querying from the second call processing task, the topology server (90) examines, when at least one of the access points to which the first and second terminals are respectively connected is from the second family while the reference topological nodes of said access points are different, whether an admitted topological path is defined between said reference topological nodes in the topology of the communication system.

8. The method as claimed in claim 7, wherein the topology server (90) selects the first communication path establishment mode when it determines that no admitted topological path is defined between said reference topological nodes in the topology of the communication system.

9. The method as claimed in claim 7 or 8, wherein the topology server (90) selects the second communication path establishment mode when it determines that an admitted topological path is defined between said reference topological nodes in the topology of the communication system.

10. The method as claimed in any one of claims 7 to 9, wherein the packet transmission network includes at least two separate sub-networks (2, 3) connected to the switching means (1) by respective gateway interfaces, and wherein the topology server (90) signals that it is impossible to establish the communication path when it determines that no admitted topological path is defined between said reference topological nodes in the topology of the communication system while the access point, to which one of the first and second terminals is connected, is connected to a gateway interface with one of the sub-networks and while the access point to which the other terminal is connected belongs to another of the sub-networks or is connected to a gateway interface with another of the sub-networks via the switching means.

11. The method as claimed in any one of the preceding claims, wherein the packet transmission network (2, 3) operates according to the IP protocol.

12. A communication system including a packet transmission network (2, 3) providing a first family of access points, switching means (1, 81-84) equipped with connection interfaces providing a second family of access points and with at least one gateway interface with the packet transmission network, call processing means to store configuration data and context data relating to terminals connected to the system via the access points and to perform processing of signaling relating to said terminals, and at least one call topology server (90) cooperating with the call processing means adapted to perform a method as claimed in any one of the preceding claims to select a communication path establishment mode from a first mode governed by mechanisms of the packet transmission network and a second mode governed by mechanisms of the switching means.

## Patentansprüche

1. Verfahren zum Aufbau von Verbindungswegen zwischen Zugriffspunkten eines Kommunikationssystems, wobei das Kommunikationssystem umfasst: mindestens ein Netz zur Übertragung von Paketen (2, 3), das eine erste Familie von Zugriffspunkten verschafft, Schaltmittel (1, 81-84), die ausgerüstet sind mit Verbindungsschnittstellen, die eine zweite Familie von Zugriffspunkten verschaffen, und mit mindestens einer Gateway-Schnittstelle mit dem Netz zur Übertragung von Paketen, Rufverarbeitungsmittel, die mindestens einen Rufserver (11, 12, 21 - 23, 31 - 33, 51 - 53) einschließen, um Konfigurierungs- und Kontextdaten zu speichern, die Terminals (60 - 63, 66 - 69, 75 - 77, 79) betreffen, die mit dem System durch die Zugriffspunkte verbunden sind, und um diese Terminals betreffende Signalisierungsbehandlungen auszuführen, und mindestens einen Topologieserver (90), der mit den Rufverarbeitungsmitteln zusammenarbeitet, um einen Verbindungswegaufbaumodus aus einem ersten Modus, der von Mechanismen des Netzes zur Übertragung von Paketen gesteuert wird, und einem zweiten Modus auszuwählen, der von Mechanismen der Schaltmittel gesteuert wird, in dem die Mechanismen der den zweiten Modus steuernden Schaltmittel vordefinierte Daten auswerten, die eine Topologie des Kommunikationssystems beschreiben, die aus zu den Schaltmitteln (1, 81 - 84) gehörenden topologischen Knoten und topologischen Wegen zusammengesetzt ist, die im Inneren der Schaltmittel zwischen Paaren von topologischen Knoten zugelassen sind, in dem man jedem Zugriffspunkt einen jeweilig zu den Schaltmitteln gehörenden topologischen Bezugsknoten zuordnet, so dass der topologische Bezugsknoten jedes Zugriffspunkts der zweiten Familie von diesem Zugriffspunkt aus zugänglich ist, ohne über das Netz zur Übertragung von Paketen zu gehen, bei dem der Verbindungswegaufbau zwischen Zugriffspunkten, um erste und zweite Terminals, die jeweils mit diesen Zugriffspunkten verbunden sind, in Verbindung zu setzen, die folgenden Schritte umfasst:
- Schaffung einer ersten Rufverarbeitungsaufgabe in einem dem ersten Terminal zugeordneten Rufserver;
- Bildung, durch die erste Rufverarbeitungsaufgabe, einer Aufbaumitteilung, die mindestens eine Nummer des ersten Terminals, eine Angabe der Familie des Zugriffspunkts, mit dem der erste Terminal verbunden ist, und den topologischen Bezugsknoten dieses Zugriffspunkts einschließt;
- als Antwort auf den Empfang dieser Aufbaumitteilung Schaffung einer zweiten Rufverarbeitungsaufgabe in einem dem zweiten Terminal zugeordneten Rufserver; und
- Abfrage des Topologieservers durch die zweite Rufverarbeitungsaufgabe auf der Basis der Familien und der topologischen Bezugsknoten der Zugriffspunkte, mit denen der erste und der zweite Terminal jeweilig verbunden sind, um Rufkonfigurierungsdaten zu erhalten, die den für den Verbindungsweg zwischen diesen Zugriffspunkten gewählten Aufbaumodus angeben.

2. Verfahren nach Anspruch 1, bei dem die in der Topologie des Kommunikationssystems zugelassenen topologischen Wege mindestens einen topologischen Weg zwischen zwei topologischen Knoten umfassen, der einen Abschnitt besitzt, der zu dem Netz zur Übertragung von Paketen (2, 3) gehört, und bei dem mindestens ein anderer topologischer Weg zwischen zwei topologischen Knoten, der einen Abschnitt besitzt, der zu dem Netz zur Übertragung von Paketen gehört, nicht zugelassen ist.

3. Verfahren nach einem der vorhergehenden Ansprüche, bei dem in Antwort auf seine Abfrage durch die zweite Rufverarbeitungsaufgabe der Topologieserver (90) den ersten Verbindungswegaufbaumodus wählt, wenn die Zugriffspunkte, mit denen der erste und der zweite Terminal jeweilig verbunden sind, alle beide von der ersten Familie sind und miteinander durch das Netz zur Übertragung von Paketen (2, 3) verbunden sind.

4. Verfahren nach Anspruch 3, bei dem das Netz zur Übertragung von Paketen mindestens zwei verschiedene Unternetze (2, 3) umfasst, die mit den Schaltmitteln (1) durch jeweilige Gateway-Schnittstellen verbunden sind, und bei dem der Topologieserver (90) als Antwort auf seine Abfrage durch die zweite Rufverarbeitungsaufgabe den zweiten Verbindungswegaufbaumodus wählt, wenn die Zugriffspunkte, mit denen der erste und der zweite Terminal jeweilig verbunden sind, alle beide von der ersten Familie sind und zu zwei verschiedenen Unternetzen gehören.

5. Verfahren nach einem der vorhergehenden Ansprüche, bei dem der Topologieserver (90) als Antwort auf seine Abfrage durch die zweite Rufverarbeitungsaufgabe den ersten Verbindungswegaufbaumodus wählt, wenn die Zugriffspunkte, mit denen der erste und der zweite Terminal jeweilig verbunden sind, von verschiedenen Familien sind und identische topologische Bezugsknoten haben.

6. Verfahren nach einem der vorhergehenden Ansprüche, bei dem der Topologieserver (90) als Antwort auf seine Abfrage durch die zweite Rufverarbeitungsaufgabe den zweiten Verbindungswegaufbaumodus wählt, wenn die Zugriffspunkte, mit denen der erste und der zweite Terminal jeweilig verbunden sind, alle beide von der zweiten Familie sind und identische topologische Bezugsknoten haben.

7. Verfahren nach einem der vorhergehenden Ansprüche, bei dem der Topologieserver (90) als Antwort auf seine Abfrage durch die zweite Rufverarbeitungsaufgabe prüft, wenn mindestens einer der Zugriffspunkte, mit denen der erste und der zweite Terminal jeweilig verbunden sind, von der zweiten Familie ist, während die topologischen Bezugsknoten dieser Zugriffspunkte verschieden sind, ob ein zugelassener topologischer Weg zwischen diesen topologischen Bezugsknoten in der Topologie des Kommunikationssystems gebildet ist.

8. Verfahren nach Anspruch 7, bei dem der Topologieserver (90) den ersten Verbindungswegaufbaumodus wählt, wenn er bestimmt, dass kein zugelassener topologischer Weg zwischen den topologischen Bezugsknoten in der Topologie des Kommunikationssystems gebildet ist.

9. Verfahren nach Anspruch 7 oder 8, bei dem der Topologieserver (90) den zweiten Verbindungswegaufbaumodus wählt, wenn er bestimmt, dass ein zugelassener topologischer Weg zwischen diesen topologischen Bezugsknoten in der Topologie des Kommunikationssystems zugelassen ist.

10. Verfahren nach einem der Ansprüche 7 bis 9, bei dem das Netz zur Übertragung von Paketen mindestens zwei verschiedene Unternetze (2, 3) umfasst, die mit den Schaltmitteln (1) durch jeweilige Gateway-Schnittstellen verbunden sind, und bei dem der Topologieserver (90) eine Unmöglichkeit des Aufbaus des Verbindungswegs signalisiert, wenn er bestimmt, dass kein zugelassener topologischer Weg zwischen diesem topologischen Bezugskonten in der Topologie des Kommunikationssystems gebildet ist, während der Zugriffspunkt, mit dem einer der ersten und zweiten Terminals verbunden ist, mit einer Gateway-Schnittstelle mit einer der Unternetze verbunden ist und der Zugriffspunkt, mit dem der andere Terminal verbunden ist, zu einem anderen der Unternetze gehört oder mit einer Gateway-Schnittstelle mit einer anderen der Unternetze über Schaltmittel verbunden ist.

11. Verfahren nach einem der vorhergehenden Ansprüche, bei dem das Netz zur Übertragung von Paketen (2, 3) gemäß dem IP-Protokoll arbeitet.

12. Kommunikationssystem, umfassend ein Netz zur Übertragung von Paketen (2, 3), das eine erste Familie von Zugriffspunkten verschafft, Schaltmittel (1, 81 - 84), die mit Verbindungsschnittstellen, die eine zweite Familie von Zugriffspunkten verschaffen, und mindestens eine Gateway-Schnittstelle mit dem Netz zur Übertragung von Paketen ausgerüstet ist, Mittel zur Rufverarbeitung, um Konfigurierungs- und Kontextdaten zu speichern, die mit dem System über die Zugriffspunkte verbundene Terminals betreffen, und um diese Terminals betreffende Signalisierungsverarbeitungen durchzuführen, und mindestens einen Topologieserver (90), der mit den Rufverarbeitungsmitteln zusammenwirkt, die ausgebildet sind, um ein Verfahren gemäß einem der vorhergehenden Ansprüche auszuführen, um einen Verbindungswegaufbaumodus aus einem ersten Modus, der durch Mechanismen des Netzes zur Übertragung von Paketen gesteuert wird, und einem zweiten Modus, der durch Mechanismen der Schaltmittel gesteuert wird, auszuwählen.
